# EUROPEAN PATENT SPECIFICATION

(11) **EP 2 991 606 B1**
(45) Date of publication and mention of the grant of the patent: **19.04.2017**
(21) Application number: 14776760.2
(22) Date of filing: 15.07.2014
(51) Int. Cl.: A61G 3/06

(54) **A RAMP SYSTEM**
RAMPENSYSTEM
SYSTÈME DE RAMPE

(30) Priority: 01.08.2013 TR 201309370
(43) Date of publication of application: 09.03.2016
(73) Proprietor: Heksagon Muhendislik ve Tasarim Anonim Sirketi, Istanbul (TR)
(72) Inventor: KIYAK, Evren, Kocaeli (TR); EROL, Kadir, Kocaeli (TR); USTUN, Ozgür, Maslak 34469 Istanbul (TR); TUNCAY, Ramazan Nejat, Istanbul (TR); TOSUN, Gurkan, Istanbul (TR)
(74) Representative: Dericioglu Kurt, Ekin
(86) International application number: PCT/TR2014/000285
(87) International publication number: WO 2015/016797

(56) References cited:
- TR-A2- 201 009 466

## Description

### Field of the Invention

The present invention relates to a ramp system with linear motor drive, which is designed to enable the physically disabled and people with reduced mobility to board or dismount from the vehicles.

### Background of the Invention

The mechanisms, which are designed to enable wheelchair-dependent physically disabled people, to board the vehicles, meet an important need in our day. Various mechanisms are designed to facilitate boarding of these people to vehicles with or without wheelchairs. Disabled individuals can easily board the vehicles by means of these mechanisms.

Today, the ramps for the disabled are generally operated by converting the rotational movement of the electric motor into linear movement that will be performed by the ramp. For this purpose, mechanical transmission means such as worm gear systems, rack-pinion gear, sheave-wire, belt-pulley systems and transmission equipments are used. Integration of these systems to vehicles causes packaging constraints. Furthermore, in many applications the ramp can only be extended towards one direction of the vehicle, thus it provides use only on one side. In this case, access to the ramp from the other side of the vehicle is not possible. Due to in-vehicle packaging constraints, the ramp can only serve as a telescopic structure. The telescopic structure increases mechanical complexity and may also cause weight and packaging problems.

Furthermore, placing the mechanical transmission system inside the vehicle causes limitations in the inner space of the vehicle and the volume of use decreases. Additionally, in conventional sliding ramp systems, moving the ramp manually poses serious problems when power is cut due to a malfunction. Because of the resistance of the mechanical transmission system, this can only be achieved as a result of a long process performed by a manifold.

Turkish Patent document no TR201009466, an application known in the state of the art, discloses a ramp mechanism (1) which comprises at least one ramp (2) which enables objects such as a wheelchair, a baby carriage or a wheel suitcase to have accessibility to interior and exterior of a vehicle and which can open to left and right sides of a vehicle, wherein the objects such as a wheelchair, a baby carriage or a wheel suitcase will get into the vehicle and get out of the vehicle by passing thereon; at least one body (3) which is fixed onto the vehicle floor and on which the ramp (2) moves; at least one motor (4) which provides actuation energy required to move the ramp (2).

### Summary of the Invention

The objective of the present invention is to provide a ramp system, according to claim 1, which enables physically disabled individuals to board the vehicle from both sides of the vehicle. Another objective of the present invention is to provide a ramp system, the packaging volume and weight of which is reduced by using a linear motor.

### Detailed Description of the Invention

A ramp system developed to fulfill the objective of the present invention is illustrated in the accompanying figures, in which,

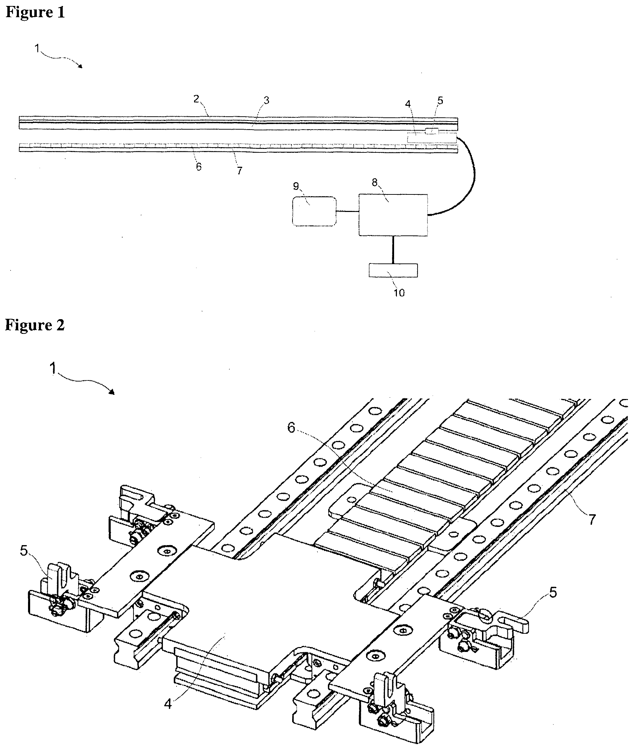

**Figure 1** is the side view of a ramp system.
**Figure 2** is the perspective view of a ramp system.

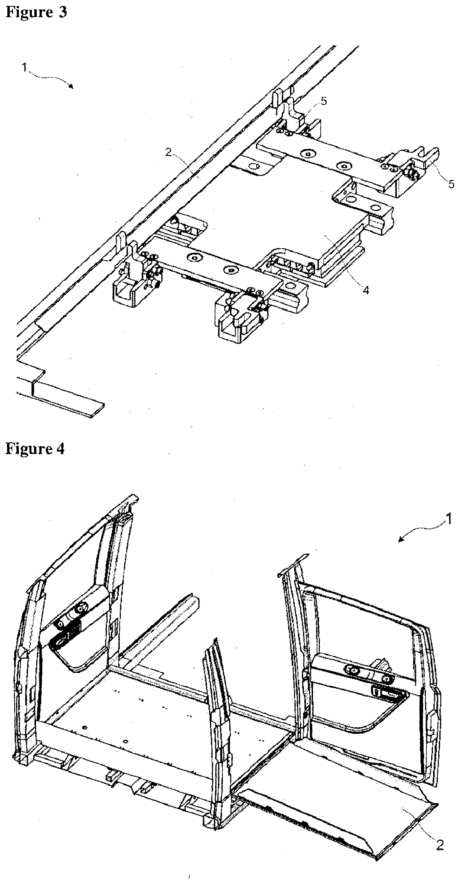

**Figure 3** is the perspective view of a ramp system from another angle.
**Figure 4** is the perspective view of a ramp system which is mounted on the vehicle.

The components shown in the figures are each given reference numbers as follows:
**1.** Ramp system
**2.** Ramp
**3.** Linear guide
**4.** Linear motor
**5.** Lock
**6.** Magnet
**7.** Base
**8.** Control unit
**9.** Remote control
**10.** Power supply

A ramp system (1) with a linear motor drive, which is designed to enable the physically disabled to board and dismount from the vehicles, enables the disabled to board the vehicle from both sides of the vehicle, and has a small packaging volume, essentially comprises
- at least one ramp (2) which extends from both sides of the vehicle and enables the wheelchair to easily board and dismount from the vehicle,
- at least one linear guide (3) which is positioned to enable movement of the ramp (2),
- at least one linear motor (4) which enables linear movement of the ramp (2) thanks to linear drive,
- at least one lock (5) which provides the connection of the ramp (2) with the linear motor (4),
- at least one magnet (6) which enables the linear motor (4) to move on a certain plane,
- at least one base (7) on which the magnets (6) are positioned,
- at least one control unit (8) which enables the power supplied to the magnets (6) to be transmitted when preferred,
- at least one remote control (9) which enables the control unit (8) to be controlled by the user,
- at least one power supply (10) which supplies power to the control unit (8).

In one embodiment of the invention, the ramp (2), which can extend from both sides of the vehicle and which thus provides ease of use in both directions, is located on the linear guide (3). The linear motor (4) is located on the lower part of the linear guide (3). Connection of the linear motor (4) with the ramp (2) is provided by the locks (5). By means of the said locks (5) that are located on each corner of the linear motor (4), the ramp (2) can be moved in preferred direction of the vehicle. In cases wherein the ramp (2) is required to be extended towards the right side of the vehicle, the locks (5) located on the right side of the linear motor (4) hold the ramp (2), and the linear motor (4) slides the ramp (2) towards the right side. Besides, when the ramp (2) is preferred to be extended towards the left side of the vehicle, the locks (5) located on the left side of the linear motor (4) hold the ramp (2), and the linear motor (4) slides the ramp (2) towards the left side of the vehicle. The linear movement of the linear motor (4) is realized by the interaction of the magnet (6) located on the base (7) with the linear motor (4). The power supplied to the magnet (6) is controlled by the control unit (8). The control unit (8) determines in which direction the linear motor (4) will move by supplying power to the magnet (6) when preferred. The drive for the control unit (8) is provided by means of a remote control (9). The power of the control unit (8) is obtained from the power supply (10).

The operation of the ramp system (1) is as follows: In the initial position, the ramp (2) is in a concealed position under the lower part of the vehicle. When the ramp (2) is in this position, the user sends a command to the control unit (8) via the remote control (9). Upon this command, the control unit (8) sends a command to the locks (5), which are located on the linear motor (4) and which will hold the ramp (2), and enables the said locks (5) to hold the ramp (2). Besides, the control unit (8) determines in which direction power will be supplied to the magnets (6) and supplies power thereto. After power is supplied to the magnets (6), the linear motor (4) moves, and moves the ramp (2) in the direction determined with the command given by the user via the remote control (9). By this means, the ramp (2) extends from the right or left side of the vehicle, and contacts the ground after a while. When the contact of the ramp (2) with the ground is provided, its movement stops and it becomes ready to use. When the user boards the vehicle, the linear motor (4) moves in the direction opposite to its first movement and thus enables the ramp (2) to be placed back into the vehicle.

## Claims

1. A ramp system (1), with a linear motor drive which is designed to enable the physically disabled to board and dismount from the vehicles, enables the disabled to board the vehicle from both sides of the vehicle and has a small packaging volume,
- at least one ramp (2) which extends from both sides of the vehicle and enables the wheelchair to easily board and dismount from the vehicle,
- at least one linear motor (4) which enables linear movement of the ramp (2) thanks to linear drive.

2. A ramp system (1) according to claim 1, **characterized by** at least one lock (5) which provides the connection of the ramp (2) with the linear motor (4).

3. A ramp system (1) according to any one of the preceding claims, **characterized by** at least one magnet (6) which enables the linear motor (4) to move on a certain plane.

4. A ramp system (1) according to any one of the preceding claims, **characterized by** at least one control unit (8) which enables the power supplied to the magnets (6) to be transmitted when preferred.

5. A ramp system (1) according to any one of the preceding claims, **characterized by** at least one remote control (9) which enables the control unit (8) to be controlled by the user.

6. A ramp system (1) according to any one of the preceding claims, **characterized by** at least one linear guide (3) which is positioned to enable movement of the ramp (2).

7. A ramp system (1) according to any one of the preceding claims, **characterized by** at least one base (2) on which the magnets (6) are positioned.

8. A ramp system (1) according to any one of the preceding claims, **characterized by** at least one power supply (10) which supplies power to the control unit (8).

9. A ramp system (1) according to any one of the preceding claims, **characterized by** the ramp (2) which can extend from both sides of the vehicle and thus provides ease of use in both directions.

10. A ramp system (1) according to any one of the preceding claims, **characterized by** the linear motor (4) which is located on the lower part of the linear guide (3) and the connection of which with the ramp (2) is provided by means of the locks (5).

11. A ramp system (1) according to any one of the preceding claims, **characterized by** the lock (5) which enables the ramp (2) to be moved in a preferred direction of the vehicle thanks to being located on each corner of the linear motor (4).

12. A ramp system (1) according to any one of the preceding claims, **characterized by** the ramp (2) which is held by the locks (5) located on the right side of the linear motor (4) in cases wherein it is required to be extended towards the right side of the vehicle.

13. A ramp system (1) according to any one of the preceding claims, **characterized by** the ramp (2) which is held by the locks (5) located on the left side of the linear motor (4) in cases wherein it is preferred to be extended towards the left side of the vehicle.

14. A ramp system (1) according to any one of the preceding claims, **characterized by** the linear motor (4), the linear movement of which is realized by its interaction with the magnet (6) located on the base (7).

15. A ramp system (1) according to any one of the preceding claims, **characterized by** the magnet (6), the power of which is controlled by the control unit (8).

16. A ramp system (1) according to any one of the preceding claims, **characterized by** the control unit (8) which determines in which direction the linear motor (4) will move by supplying power to the magnet (6) when preferred and the drive of which is provided by means of the remote control (9).

17. A ramp system (1) according to any one of the preceding claims, **characterized by** the control unit (8); which sends a command to the locks (5), which are located on the linear motor (4) and which will hold ramp (2); and enables the said locks (5) to hold the ramp (2).

18. A ramp system (1) according to any one of the preceding claims, **characterized by** the control unit (8) which determines in which direction power will be supplied to the magnets (6) and supplies power thereto.

19. A ramp system (1) according to any one of the preceding claims, **characterized by** the linear motor (4), which moves after power is supplied to the magnets (6), and moves the ramp (2) in the direction determined with the command given by the user via the remote control (9).

20. A ramp system (1) according to any one of the preceding claims, **characterized by** the ramp (2) which extends from the right or left side of the vehicle and contacts the ground after a while, the movement of which stops when the contact with the ground is provided, and becomes ready to use.

21. A ramp system (1) according to any one of the preceding claims, **characterized by** the linear motor (4) which moves in the direction opposite to its first movement when the user boards the vehicle, and thus enables the ramp (2) to be placed back into the vehicle.

## Patentansprüche

1. Ein Rampensystem (1) mit einem Linearmotorantrieb , welcher ausgestalt ist den Einstieg und Abstieg von Körperbehinderten in und aus den Fahrzeugen zu ermöglichen, ermöglicht, dass die Körperbehinderte aus beiden Seiten in die Fahrzeugen einsteigen und aufweisend ein kleines Packungsvolumen und
- mindestens eine Rampe (2), welche sich aus beiden Seiten des Fahrzeugs erstreckt und ermöglicht, dass die Rollstühle ohne Umstände in und aus den Fahrzeugen ein-und austeigen,
- mindestens einen Linearmotor (4), welcher durch den linearen Antrieb die Längenbewegung der Rampe (2) ermöglicht,

2. Ein Rampensystem (1) gemäß Anspruch 1, **gekennzeichnet durch** mindestens eine Verriegelung (5), welche die Verbindung der Rampe (2) mit dem Linearmotor (4) bereitstellt.

3. Ein Rampensystem (1) gemäß einem der vorangehenden Ansprüche, **gekennzeichnet durch** mindestens einen Magnet (6), welcher es ermöglicht, dass der Linearmotor (4) sich auf einer bestimmten Ebene bewegt.

4. Ein Rampensystem (1) gemäß einem der vorangehenden Ansprüche, **gekennzeichnet durch** mindestens eine Steuereinheit (8), welche es ermöglicht, die den Magneten (6) zugeführte Leistung, wenn bevorzugt, weiterzuleiten.

5. Ein Rampensystem (1) gemäß einem der vorangehenden Ansprüche, **gekennzeichnet durch** mindestens eine Fernbedienung (9), welche es ermöglicht, dass die Steuereinheit **durch** den Benutzer gesteuert wird.

6. Ein Rampensystem (1) gemäß einem der vorangehenden Ansprüche, **gekennzeichnet durch** mindestens eine Linearführung (3), welche so angeordnet ist, dass sie eine Bewegung der Rampe ermöglicht.

7. Ein Rampensystem (1) gemäß einem der vorangehenden Ansprüche, **gekennzeichnet durch** mindestens eine Grundlage (2), auf welcher die Magneten (6) angeordnet sind.

8. Ein Rampensystem (1) gemäß einem der vorangehenden Ansprüche, **gekennzeichnet durch** mindestens eine Leistungsversorgung (10), welche Leistung für die Steuereinheit (8) bereitstellt.

9. Ein Rampensystem (1) gemäß einem der vorangehenden Ansprüche, **gekennzeichnet durch** mindestens eine Rampe (2), welche sich aus beiden Seiten des Fahrzeugs erstrecken kann und so eine einfache Nutzung in beiden Richtungen ermöglicht.

10. Ein Rampensystem (1) gemäß einem der vorangehenden Ansprüche, **gekennzeichnet durch** den Linearmotor (4), der auf dem unteren Teil der Linearführung (3) angeordnet ist und dessen Verbindung mit der Rampe (2) mit Hilfe der Verschlüsse (5) bereitgestellt ist.

11. Ein Rampensystem (1) gemäß einem der vorangehenden Ansprüche, **gekennzeichnet durch** die Verriegelung (5), die es ermöglicht, die Rampe in einer bevorzugten Richtung des Fahrzeugs **dadurch** zu bewegen, dass sie auf je einer Ecke des Linearmotors angeordnet ist.

12. Ein Rampensystem (1) gemäß einem der vorangehenden Ansprüche, **gekennzeichnet durch** die Rampe (2), die **durch** die auf der rechten Seite des Linearmotors (4) angeordneten Verriegelungen (5) gehalten wird, in Fällen, in denen es erforderlich ist, die Rampe zur rechten Seite des Fahrzeugs zu erstrecken.

13. Ein Rampensystem (1) gemäß einem der vorangehenden Ansprüche, **gekennzeichnet durch** die Rampe (2), die **durch** die auf der linken Seite des Linearmotors (4) angeordneten Verriegelungen (5) gehalten wird, in Fällen, in denen es bevorzugt ist, die Rampe zur linken Seite des Fahrzeugs zu erstrecken.

14. Ein Rampensystem (1) gemäß einem der vorangehenden Ansprüche, **gekennzeichnet durch** den Linearmotor (4), dessen geradlinige Bewegung **durch** seine Wechselwirkung mit dem auf der Grundlage (7) angeordneten Magneten (6) erfolgt.

15. Ein Rampensystem (1) gemäß einem der vorangehenden Ansprüche, **gekennzeichnet durch** den Magnet (6), dessen Leistung **durch** die Steuereinheit (8) gesteuert wird.

16. Ein Rampensystem (1) gemäß einem der vorangehenden Ansprüche, **gekennzeichnet durch** die Steuereinheit (8), die es bestimmt, in welcher Richtung sich der Linearmotor (4) bewegen soll, indem er dem Magneten (6) Leistung zuführt und dessen Antrieb mittels der Fernbedienung (9) bereitgestellt ist.

17. Ein Rampensystem (1) gemäß einem der vorangehenden Ansprüche, **gekennzeichnet durch** die Steuereinheit (8), die an die Verriegelungen einen Befehl übersendet, die auf dem Linearmotor (4) angeordnet sind und die Rampe (2) halten sollen und ermöglicht den erwähnten Verriegelungen (5) die Rampe zu halten.

18. Ein Rampensystem (1) gemäß einem der vorangehenden Ansprüche, **gekennzeichnet durch** die Steuereinheit (8), die es bestimmt, in welcher Richtung Leistung zu den Magneten (6) bereitgestellt werden soll und stellt ihnen Leistung bereit.

19. Ein Rampensystem (1) gemäß einem der vorangehenden Ansprüche, **gekennzeichnet durch** den Linearmotor (4), der sich bewegt, nachdem die Magneten (6) mit Strom versorgt wurden und welche die Rampe (2) durch den von dem Benutzer über die Frenbedienung (9) gegebenen Befehl in die festgelegte Richtung bewegt.

20. Ein Rampensystem (1) gemäß einem der vorangehenden Ansprüche, **gekennzeichnet durch** die Rampe (2), die sich von der rechten Seite bzw. der linken Seite des Fahrzeugs erstreckt und nach einiger Zeit den Boden berührt, deren Bewegung endet, wenn der Kontakt mit dem Boden vollzogen und auf diese Weise zur Nutzung bereit ist.

21. Ein Rampensystem (1) gemäß einem der vorangehenden Ansprüche, **gekennzeichnet durch** den Linearmotor (4), der sich in der entgegengesetzten Richtung zu seiner ersten Bewegung bewegt, wenn der Benutzer in das Fahrzeug einsteigt und auf diese Weise ermöglicht, dass die Rampe (2) in das Fahrzeug zurückgezogen werden kann.

## Revendications

1. Un système de rampe (1), équipé d'un entraînement motorisé linéaire conçu pour permettre aux personnes physiquement handicapées d'embarquer et de descendre des véhicules, permet aux personnes handicapées d'embarquer le véhicule des deux côtés du véhicule et a un petit volume d'emballage, au moins une rampe (2) qui s'étend des deux côtés du véhicule et permet au fauteuil roulant d'embarquer et de descendre facilement du véhicule, au moins un moteur linéaire (4) qui permet le déplacement linéaire de la rampe (2) grâce à un entraînement linéaire.

2. Un système de rampe (1) selon la revendication 1, **caractérisé par** au moins un verrou (5) qui assure la liaison de la rampe (2) avec le moteur linéaire (4).

3. Un système de rampe (1) selon l'une quelconque des revendications précédentes, **caractérisé par** au moins un aimant (6) qui permet au moteur linéaire (4) de se déplacer dans un certain plan.

4. Un système de rampe (1) selon l'une quelconque des revendications précédentes, **caractérisé par** au moins une unité de commande (8) qui permet de transmettre la puissance fournie aux aimants (6) lorsque cela est préférée.

5. Un système de rampe (1) selon l'une quelconque des revendications précédentes, **caractérisé par** au moins une télécommande (9) qui permet à l'unité de commande (8) d'être commandée par l'utilisateur.

6. Un système de rampe (1) selon l'une quelconque des revendications précédentes, **caractérisé par** au moins un guide linéaire (3) qui est positionné pour permettre le mouvement de la rampe (2).

7. Un système de rampe (1) selon l'une quelconque des revendications précédentes, **caractérisé par** au moins une base (2) sur laquelle les aimants (6) sont positionnés.

8. Un système de rampe (1) selon l'une quelconque des revendications précédentes, **caractérisé par** au moins une alimentation électrique (10) fournissant de l'énergie à l'unité de commande (8).

9. Un système de rampe (1) selon l'une quelconque des revendications précédentes, **caractérisé par** la rampe (2) qui peut s'étendre depuis les deux côtés du véhicule et fournit ainsi une facilité d'utilisation dans les deux sens.

10. Un système de rampe (1) selon l'une quelconque des revendications précédentes, **caractérisé par** le moteur linéaire (4) situé sur la partie inférieure du guide linéaire (3) et dont la liaison avec la rampe (2) est prévue au moyen des verrous (5).

11. Un système de rampe (1) selon l'une quelconque des revendications précédentes, **caractérisé par** le verrou (5) qui permet de déplacer la rampe (2) dans une direction préférée du véhicule grâce à être situé sur chaque coin du moteur linéaire (4).

12. Un système de rampe (1) selon l'une quelconque des revendications précédentes, **caractérisé par** la rampe (2) qui est maintenue par les verrous (5) situés sur le côté droit du moteur linéaire (4) dans les cas où il est nécessaire d'être prolongée vers le côté droit du véhicule.

13. Un système de rampe (1) selon l'une quelconque des revendications précédentes, **caractérisé par** la rampe (2) qui est retenue par les verrous (5) situés sur le côté gauche du moteur linéaire (4) dans les cas où il est préféré d'être prolongée vers le côté gauche du véhicule.

14. Un système de rampe (1) selon l'une quelconque des revendications précédentes, **caractérisé par** le moteur linéaire (4), dont le mouvement linéaire est réalisé par son interaction avec l'aimant (6) situé sur la base (7).

15. Un système de rampe (1) selon l'un des revendications précédentes, **caractérisé par** l'aimant (6) dont la puissance est commandée par l'unité de commande (8).

16. Un système de rampe (1) selon l'une quelconque des revendications précédentes, **caractérisé en ce que** l'unité de commande (8) qui détermine dans quelle direction le moteur linéaire (4) se déplacera en fournissant de l'énergie à l'aimant (6) lorsque cela est préférée et dont l'entraînement est fournie au moyen de la télécommande (9).

17. Un système de rampe (1) selon l'une quelconque des revendications précédentes, **caractérisé par** l'unité de commande (8); qui envoie une commande aux verrous (5) qui sont situées sur le moteur linéaire (4) et qui maintient la rampe (2); et permet auxdits verrouillages (5) de maintenir la rampe (2).

18. Un système de rampe (1) selon l'une quelconque des revendications précédentes, **caractérisé par** l'unité de commande (8) qui détermine dans quelle direction l'alimentation d'électrique sera fournies aux aimants (6) et leur fournit de l'énergie.

19. Un système de rampe (1) selon l'une quelconque des revendications précédentes, **caractérisé par** le moteur linéaire (4), qui se déplace après l'énergie est fournie aux aimants (6), et déplace la rampe (2) dans la direction déterminée avec la commande donnée par l'utilisateur via la télécommande (9).

20. Un système de rampe (1) selon l'une quelconque des revendications précédentes, **caractérisé par** la rampe (2) qui s'étend depuis le côté droit ou gauche du véhicule et vient en contact avec le sol après un certain temps, dont le mouvement s'arrête lorsque le contact avec le sol est assure, et devient prêt à l'emploi.

21. Un système de rampe (1) selon l'une quelconque des revendications précédentes, **caractérisé par** le moteur linéaire (4) se déplace dans la direction opposée à son premier mouvement lorsque l'utilisateur monte sur le véhicule et permet ainsi à la rampe (2) d'être placé de nouveau dans le véhicule.
